# EUROPÄISCHE PATENTANMELDUNG

(11) **EP 0 889 308 A2**
(43) Veröffentlichungstag der Anmeldung: **07.01.1999**
(21) Anmeldenummer: 98112350.8
(22) Anmeldetag: 03.07.1998
(51) Int. Cl.: G01J 5/06

(54) **Vorrichtung zur Vermessung von heissen Gegenständen**

(30) Priorität: 04.07.1997 DE 19728632
(71) Anmelder: Visicontrol Gesellschaft für elektronische Bildverarbeitung mbH, 88250 Weingarten (DE)
(72) Erfinder: Jauch, Volker, 88255 Baienfurt (DE)
(74) Vertreter: Patentanwälte Eisele, Otten & Roth

(57) **Zusammenfassung**

Es wird eine Vorrichtung vorgeschlagen, die es ermöglicht, Gegenstände und insbesondere Glaskörper bei hoher Temperatur während der Bearbeitung berührungslos und genau zu vermessen. Diese Aufgabe wird mit Hilfe eines Bildverarbeitungssystems gelöst, das eine Beleuchtungsquelle (2) und eine Kamera (3) im sichtbaren Bereich oder im Infrarotbereich umfaßt, wobei zusätzlich ein Filter (5, 6) zur Unterdrückung von Störstrahlung vorgesehen ist.

## Beschreibung

Die Erfindung betrifft eine Vorrichtung zur Vermessung von heißen Gegenständen nach dem Oberbegriff des Anspruchs 1.

Für die Herstellung von heißen Gegenständen, beispielsweise Glasdüsen ist eine Vermessung der Herstellungsmaße entweder zur Sortierung von Ausschuß oder zur aktiven Regelung von Formungsparametern während der Herstellung erwünscht. Zur Vermessung von heißen Gegenständen während der Formung waren bildgebende Verfahren mit Beleuchtungsquellen im sichtbaren oder im Infrarotbereich bislang nicht einsetzbar. Bei Verwendung von sichtbarem Licht kann das Meßergebnis durch Streulicht aus der Umgebung und je nach Temperatur auch durch eine Abstrahlung des Gegenstandes während des Formungsprozesses gestört werden. Bei Verwendung von Infrarotstrahlung ist Umgebungslicht oder dessen Streulicht nicht in diesem Maße problematisch, dafür nimmt jedoch der Anteil der Wärmestrahlung eines Körpers bei hoher Temperatur erheblich zu.

Aus diesem Grund wurden bislang derartige bildgebende Verfahren zur Vermessung von Gegenständen bei hoher Temperatur als nicht geeignet gehalten.

Andererseits würden bildgebende Verfahren eine berührungslose und exakte Messung ermöglichen, wobei im Falle von Glaskörpern, die transparent für die verwendete Strahlung sind, auch Konturen im Inneren des Glaskörpers erfaßbar sind. Zur Vermessung von Glaskörpern hat sich eine Durchlicht-Hellfeldbeleuchtung im Infraroten zur Abbildung in erkaltetem Zustand zur Sichtbarmachung der Konturen bewährt.

Aufgabe der Erfindung ist es daher, eine Vorrichtung vorzuschlagen, die es ermöglicht, Gegenstände und insbesondere Glaskörper bei hoher Temperatur während der Bearbeitung berührungslos und genau zu vermessen.

Diese Aufgabe wird durch die Merkmale des Anspruchs 1 gelöst.

Dementsprechend wird ein Bildverarbeitungssystem mit einer Beleuchtungsquelle und einer Kamera im sichtbaren Bereich oder im Infrarotbereich eingesetzt, wobei zusätzlich ein Frequenz-Filter vorgesehen ist.

Mit Hilfe eines solchen Filters, der vorzugsweise sowohl an das Frequenzspektrum der Beleuchtungsquelle sowie der auftretenden Wärmestrahlung angepaßt wird, ist es damit erstmals möglich, auch heiße Körper, insbesondere Glaskörper, wie Glasdüsen, Kapillaren, etc. während der Fertigung zu vermessen.

In einer Weiterbildung der Erfindung wird eine schmalbandige Beleuchtungsquelle verwendet. Hierdurch ist eine Anpassung des Filters an das Bildverarbeitungssystem leichter möglich, wobei zugleich das Verhältnis zwischen Störstrahlung und Meßstrahlung in diesem Frequenzband verbessert ist.

In einem besonderen Ausführungsbeispiel der Erfindung wird ein Bandpaßfilter zum Ausblenden der Strahlung außerhalb des Frequenzbandes des Bildverarbeitungssystems sowohl im kurzwelligen als auch im langwelligen Bereich vorgesehen.

Die Art der Beleuchtung, der Kamera sowie der geometrischen Anordnung von Beleuchtung und Kamera ist vorteilhafterweise auch dem jeweils zu vermessenden Objekt anzupassen.

Vorteilhafterweise wird eine Beleuchtungsquelle mit einer Wellenlänge zwischen 850 nm und 900 nm verwendet. Insbesondere Leuchtdioden (LED) mit 875 nm Wellenlänge haben sich in der Bildverarbeitung bereits bewährt und sind daher als handelsübliche, zuverlässige Bauteile erhältlich.

Wie bereits oben angeführt, stellt bei der Verwendung eines Bildverarbeitungssystems im infraroten Bereich das Umgebungslicht oder Streulicht im sichtbaren Bereich keinen Störfaktor dar, so daß mit Hilfe des erfindungsgemäßen Filters nur die störende Wärmestrahlung des zu vermessenden Körpers soweit als möglich ausgeblendet werden muß. Je schmalbandiger hierbei die Beleuchtungsquelle arbeitet und je genauer der Filter alle anderen Frequenzbereiche unterdrücken kann, umso besser wird das Verhältnis zwischen der Meßstrahlung und der Störstrahlung zugunsten einer Bildaufnahme mit hoher Qualität.

Vorteilhafterweise wird daher bei Verwendung einer vorgenannten Beleuchtungsquelle ein Filter verwendet, das für Wellenlängebereiche > 900 nm soweit als möglich undurchlässig ist. Dieses Infrarotfilter wird bevorzugt zwischen dem Objektiv zur Abbildung des zu erfassenden Bildes in der Kamera und der Kamera angeordnet.

Weiterhin wird vorzugsweise ein weiteres Filter eingesetzt, das für Wellenlängen < 750 nm soweit als möglich undurchlässig ist. Beide genannten Filter ergeben Zusammen ein Bandpaßfilter wie oben angeführt, wobei vorzugsweise der Wellenlängenbereich der Beleuchtungsquelle im Inneren des durch die Filter durchlässigen Wellenlängenbereichs liegt.

Als Filter für die Unterdrückung der langwelligeren Strahlung kann beispielsweise ein sogenanntes Neutralglas verwendet werden. Dieses Neutralglas wird bevorzugt vor dem Objektiv angeordnet. Hierdurch wird zusätzlich das Objektiv vor Verschmutzung geschützt.

In einer besonderen Weiterbildung der Erfindung wird zusätzlich ein Temperaturmeßgerät zur Erfassung der Temperatur des zu vermessenden Körpers eingesetzt.

Mit Hilfe dieses Temperaturmeßgeräts können vor allem Körper vermessen werden, deren Temperatur während des zu kontrollierenden Fertigungsprozesses Schwankungen unterliegt. Mit derartigen Temperaturschwankungen verbunden ist eine Verschiebung des Maximums der von diesem Körper ausgesandten Wärmestrahlung.

Durch Erfassung des Temperaturpunktes des zu vermessenden Körpers kann somit der Zeitpunkt optimiert werden, in dem der Einsatz der erfindungsgemäßen Vorrichtung besonders vorteilhaft ist. Dies wird in der Regel so gewählt werden, daß das Maximum der Wärmestrahlung außerhalb des durchlässigen Bereichs des Bandpaßfilters liegt. Mit Hilfe dieses Temperaturmeßgeräts läßt sich der Meßvorgang der Bildverarbeitung dahingehend steuern, daß er nur bei bestimmten Temperaturen stattfindet.

In einer besonderen Weiterbildung dieses Ausführungsbeispiels wird als Temperaturmeßgerät ein Pyrometer vorgesehen, das die Temperatur aufgrund der Frequenz der von dem heißen Körper ausgesandten Strahlung bestimmt. Ein Pyrometer stellt somit ein berührungsloses Meßverfahren dar. In Kombination mit dem Bildverarbeitungssystem arbeitet somit die gesamte Meßvorrichtung einschließlich der Temperaturmessung berührungslos.

In einer besonderen Ausführungsform der Erfindung wird in aufeinanderfolgenden Meßzyklen jeweils ein Bild erfaßt. Durch entsprechende Auswertung der Ergebnisse verschiedener Meßzyklen läßt sich der Bearbeitungszustand des vermessenen Körpers mit der entsprechenden Zeitauflösung aufnehmen. Derartige Meßzyklen können beispielsweise im Bereich zwischen 100 und 200 Millisekunden, z. B. innerhalb von 150 Millisekunden ablaufen.

Ein Ausführungsbeispiel der Erfindung ist in der Zeichnung dargestellt und wird anhand der Figuren nachfolgend näher erläutert.

Im Einzelnen zeigen
- Fig. 1: eine schematische Darstellung einer Vorrichtung zur Vermessung von Glasdüsen während der Fertigung,
- Fig. 2: eine Transmissionskurve eines Bandpaßfilters und
- Fig. 3: ein tatsächlich gemessenes Bild während der Fertigung von Glasdüsen.

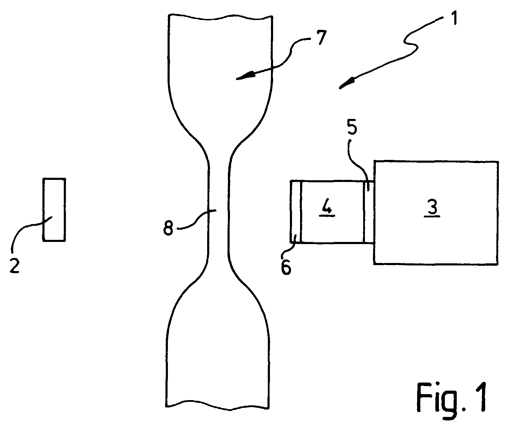

In Fig. 1 ist eine Vorrichtung 1 mit Beleuchtungsquelle 2 und einer Kamera 3 dargestellt. Die Kamera 3 ist mit einem Objektiv 4 versehen. Zwischen Objektiv 4 und Kamera 3 ist ein Infrarotfilter 5 als Tiefpass zur Unterdrückung kurzwelliger Strahlung angeordnet. Auf der gegenüberliegenden Seite des Objektivs 4 ist ein Neutralglasfilter 6 aufgesetzt.

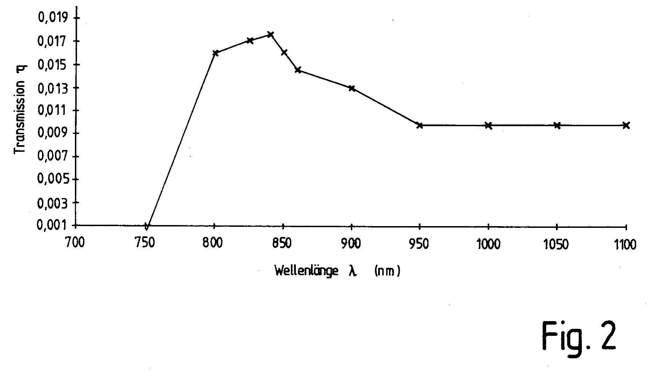

In der Darstellung gem. Fig. 2 ist eine Transmissionskurve für eine Filterkombination bestehend aus einem IR-Filter 5 und einem Neutralglasfilter 6 dargestellt. Diese Filterkombination eignet sich vor allem für eine Beleuchtungsquelle, die mit einer Wellenlänge zwischen ca. 800 und 900 nm arbeitet.

Der abfallende Bereich zu kurzen Wellenlängen hin wird hierbei im Wesentlichen durch den IR-Filter verursacht, während der Kurvenverlauf zu höheren Wellenlängen durch das Neutralglasfilter bestimmt wird.

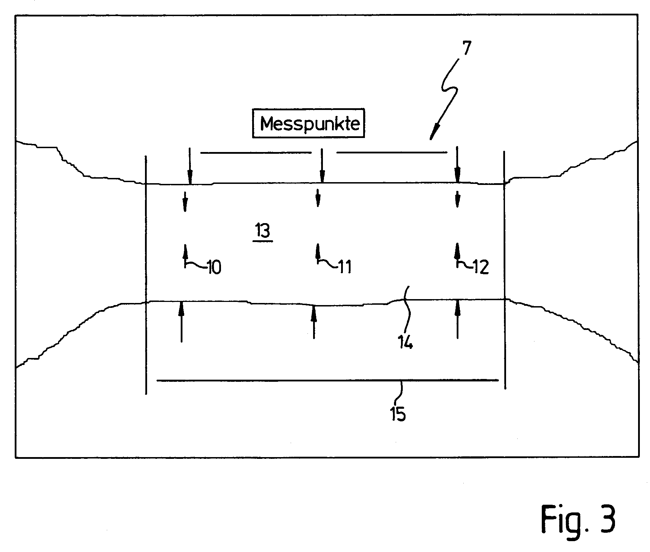

In der Darstellung gem. Fig. 3 ist das Bild einer erfindungsgemäß abgebildeten Glaskapillare einer Glasdüse erkennbar.

Glasdüsen werden aus kurzen Rohrglasrohlingen hergestellt. Das Glasröhrchen wird hierbei zwischen zwei Spannhülsen auf einer Drehmaschine eingespannt und in der Mitte mittels Flamme zur Rotglut erhitzt. Jetzt wird seitlich eine Rolle an die Schmelze herangefahren und das Röhrchen verjüngt. Dieses Verfahren wird insbesondere zur Herstellung von Kapillaren verwendet. Die Rolle fährt derzeit, d. h. nach dem Stand der Technik auf einen Anschlag, ohne das Ergebnis absehen zu können. Das erkaltete Röhrchen soll automatisch entnommen werden. Da die Rohlinge im Durchmesser und der Ovalität gewisse Toleranzen aufweisen, entsteht nach dem Stand der Technik ein hoher Anteil von Ausschuß.

Die beispielsweise nach dem obengenannten Verfahren entstandene, sogenannte Doublette 7 dient später zur Fertigung zweier Düsen. Die Kapillare 8 wird hierzu mit einer Diamantscheibe möglichst genau in der Mitte getrennt.

Die Maßhaltigkeit der Kapillare 8 soll im vorliegenden Ausführungsbeispiel mit Hilfe der Vorrichtung 1 verbessert werden. Dies kann beispielsweise durch eine automatische Sortierung oder aber auch durch eine aktive Regelung eines Prozeßparameters, z. B. der Steuerung der Rolle zur Querschnittsverjüngung geschehen.

Der Innenradius und der Außenradius wird beispielsweise an drei Stellen 10, 11, 12 über die Länge der Kapillare gemessen. Der hellere Mittelstreifen 13 gibt das Innere der Kapillare, der dunklere Bereich 14 die Wand der Kapillare wieder. Der Walzenbereich 15 ist durch drei Linien angedeutet. Die Kapillare 13 ist Teil einer Doublette 7 wie o. a.

Mit einer erfindungsgemäßen Vorrichtung können somit die Doubletten durch Abbildung dargestellt mit ausreichender Genauigkeit vermessen werden.

Eine Testmessung gemäß der folgenden Tabelle ergab eine gute Reproduzierbarkeit der Meßergebnisse.

| Messung | links | mitte | rechts |
|---|---|---|---|
| 1 | 1.501 | 1.645 | 1.468 |
| 2 | 1.446 | 1.540 | 1.375 |
| 3 | 1.577 | 1.785 | 1.570 |
| 4 | 1.246 | 1.355* | 1.192* |
| 5 | 1.435 | 1.598 | 1.439 |
| 6 | 1.395 | 1.573 | 1.368 |
| 7 | 1.432 | 1.602 | 1.340 |
| 8 | 1.456 | 1.570 | 1.387 |
| 9 | 1.484 | 1.692 | 1.530 |
| 10 | 1.470 | 1.609 | 1.507 |

| | | | |
|---|---|---|---|
| * Außerhalb der Toleranz, d. h. nicht in Ordnung | | | |

Eine Bildauswertung während der Erwärmungsphase aufgrund der intensiven IR-Strahlung der Schmelze hat sich als äußerst schwierig erwiesen. Grundsätzlich kann die Kontur eines Glaskörpers während des Verformungsprozesses nur mit Hilfe eines Filters sichtbar gemacht werden. Die Qualität der Bildauswertung verschlechtert sich hierbei zunehmend mit dem Temperaturanstieg des Prüflings, aufgrund der hohen IR-Strahlung.

Deshalb hat es sich als vorteilhaft erwiesen, die Bildauswertung während der Abkühlungsphase durchzuführen. Besonders gute Ergebnisse ergaben sich hierbei unter Verwendung eines Pyrometers, das die Messung bei Erreichen eines definierten Temperaturpunktes während der Abkühlungsphase startet. Die gewünschten Maße, beispielsweise die Durchmesser der Kapillare 8, werden hierbei innerhalb eines vorgegebenen Zyklusses, beispielsweise von 150 Millisekunden, periodisch gemessen und ausgewertet. Durch Vergleich mit einem Sollwert lassen sich Schaltpunkte für die weitere Bearbeitung bestimmen.

So wird bei Glaskapillaren üblicherweise eine Voreinengung durch Auseinanderziehen vorgenommen und anschließend die Endformung durch Bearbeitung mit einer Walze durchgeführt. Mit Hilfe der erfindungsgemäßen Bildverarbeitung kann beispielsweise der Schaltpunkt zum Einsatz der Walze bestimmt werden. Auch die Dauer des Verarbeitungsprozesses mit der Walze sowie die Steuerung dieser Formwalze kann mit Hilfe der Bildverarbeitung gesteuert werden.

Es wurden bereits Meßgenauigkeiten eines Kapillarendurchmessers bei einer Voreinengung innerhalb von ca. ± 0,2 mm erreicht. Die Maßhaltigkeit eines Endprodukts nach der Endkontrolle konnte in einem Toleranzintervall von ca. ± 0,05 mm realisiert werden.

Bei einer Messung gemäß dem dargestellten Ausführungsbeispiel konnte eine Bildauflösung im Bereich von 1/100 mm erreicht werden. Diese Auflösung hängt von verschiedenen Parametern, beispielsweise vom Abstand zwischen Objekt und Kamera bzw. Objektiv sowie von der Güte der verwendeten Kamera ab. Alle diese Parameter können dem jeweiligen Anwendungszweck angepaßt werden. Die verwendete Wellenlänge bzw. das verwendete Wellenlängenintervall, die Geometrie der Abstrahlcharakteristik der Beleuchtungsquelle und vieles mehr können an die Form und die Materialeigenschaften des zu vermessenden Objekts angepaßt werden. Wesentlich für die erfindungsgemäße Vorrichtung ist jedoch der Einsatz eines Filters, um Störungen aufgrund der Wärmestrahlung des zu vermessenden Objekts zu unterdrücken.

### Bezugszeichenliste:

- 1: Vorrichtung
- 2: Beleuchtungsquelle
- 3: Kamera
- 4: Objektiv
- 5: IR-Filter
- 6: Neutralglasfilter
- 7: Doublette
- 10: Meßstelle
- 11: Meßstelle
- 12: Meßstelle
- 13: Innenbereich
- 14: Wand
- 15: Walzenbereich

## Patentansprüche

1. Vorrichtung zur Vermessung von Gegenständen bei erhöhter Temperatur, dadurch gekennzeichnet, daß ein Bildverarbeitungssystem mit einer Beleuchtungsquelle (2) und einer Kamera (3) vorhanden ist, wobei ein Filter (5, 6) zur Unterdrückung der Wärmestrahlung des Gegenstandes (7) vorgesehen ist.

2. Vorrichtung nach Anspruch 1, dadurch gekennzeichnet, daß das Bildverarbeitungssystem im Infrarotbereich arbeitet.

3. Vorrichtung nach einem der vorgenannten Ansprüche, dadurch gekennzeichnet, daß die Beleuchtungsquelle (2) des Bildverarbeitungssystems schmalbandig abstrahlt.

4. Vorrichtung nach einem der vorgenannten Ansprüche, dadurch gekennzeichnet, daß die Strahlung der Beleuchtungsquelle (2) eine Wellenlänge zwischen 850 und 900 nm aufweist.

5. Vorrichtung nach einem der vorgenannten Ansprüche, dadurch gekennzeichnet, daß das Filter (5, 6) ein Bandpaßfilter ist.

6. Vorrichtung nach einem der vorgenannten Ansprüche, dadurch gekennzeichnet, daß das Filter (5) für Wellenlängen > 900 nm soweit als möglich undurchlässig ist.

7. Vorrichtung nach einem der vorgenannten Ansprüche, dadurch gekennzeichnet, daß das Filter (6) für Wellenlängen < 750 nm soweit als möglich undurchlässig ist.

8. Vorrichtung nach einem der vorgenannten Ansprüche, dadurch gekennzeichnet, daß das Filter (5, 6) wenigstens zwei Filterelemente umfaßt.

9. Vorrichtung nach einem der vorgenannten Ansprüche, dadurch gekennzeichnet, daß ein IR-Filter (5) als Tiefpass und ein Neutralglas (6) vorgesehen sind.

10. Vorrichtung nach einem der vorgenannten Ansprüche, dadurch gekennzeichnet, daß ein Temperaturmeßgerät vorhanden ist.

11. Vorrichtung nach einem der vorgenannten Ansprüche, dadurch gekennzeichnet, daß das Temperaturmeßgerät ein Pyrometer ist.

12. Vorrichtung nach einem der vorgenannten Ansprüche, dadurch gekennzeichnet, daß eine Steuerung zum Starten der Messung bei Erreichen eines bestimmten Temperaturpunktes vorgesehen ist.

13. Vorrichtung nach einem der vorgenannten Ansprüche, dadurch gekennzeichnet, daß die Steuerung für eine zyklische Wiederholung der Messung ausgelegt ist.

14. Vorrichtung nach einem der vorgenannten Ansprüche, dadurch gekennzeichnet, daß Meßgrößen aus der Bildauswertung als Stellgrößen für Bearbeitungsparameter des Gegenstands verwendbar sind.

15. Verfahren zur Vermessung von Gegenständen bei erhöhter Temperatur, dadurch gekennzeichnet, daß eine Vorrichtung nach einem der vorgenannten Ansprüche verwendet wird.
